# EUROPÄISCHE PATENTSCHRIFT

(11) **EP 0 612 646 B1**
(45) Veröffentlichungstag und Bekanntmachung des Hinweises auf die Patenterteilung: **03.12.1997**
(21) Anmeldenummer: 94101098.5
(22) Anmeldetag: 26.01.1994
(51) Int. Cl.: B61D 3/10, B62D 47/02, B60D 5/00, B61D 17/20

(54) **Gelenkverbindung zum gelenkigen Verbinden von Fahrzeugteilen eines mehrgliedrigen Schienenfahrzeuges**
Hinge for the articulated connection of vehicle sections of articulated railway vehicles
Charnière pour la jonction articulée des sections de véhicule des véhicules ferroviaires articulés

(30) Priorität: 24.02.1993 DE 4305614
(43) Veröffentlichungstag der Anmeldung: 31.08.1994
(73) Patentinhaber: Linke-Hofmann-Busch GmbH, D-38239 Salzgitter (DE)
(72) Erfinder: Rother, Hans-Jürgen, D-38259 Salzgitter (DE); Stache, Karl-Heinz, D-38226 Salzgitter (DE); Claus, Christian, Dipl.-Ing., D-38106 Braunschweig (DE)

(56) Entgegenhaltungen:
- WO-A-89/09715
- DE-A- 3 902 924
- DE-B- 1 013 527
- FR-A- 2 348 092

## Beschreibung

Die Erfindung betrifft eine Gelenkverbindung zum gelenkigen Verbinden von Fahrzeugteilen eines mehrgliedrigen Schienenfahrzeuges nach dem Oberbegriff des Anspruchs 1.

Eine derartige Gelenkverbindung ist für zwei Wagenkästen aus der FR-A-2 348 092 bekannt und weist einen Drehkranz mit mindestens zwei Drehkranzringen auf, die relativ um eine vertikale Achse schwenken können. Ein Drehkranzring ist auf einem den beiden Wagenkästen gemeinsamen Laufwerk abgestützt. Ein Wagenkasten ist über zwei Drehgelenke um eine horizontale Querachse schwenkbar mit einem Drehkranzring verbunden. Dieser Drehkranzring besteht aus mindestens einem Gelenk, das den zweiten Wagenkasten um eine horizontale Längsachse schwenkbar mit einem Teil verbindet, das entsprechend der Schwenkachse des Drehkranzes von einem Gelenkzapfen getragen und geführt wird, der sich auf einem mit dem Drehkranz verbundenen Querträger abstützt.

Die vorgenannte Gelenkverbindung ist in der vorgeschlagenen Bauweise nur für Gelenkfahrzeuge geeignet, deren Wagenkästen im Gelenkbereich auf einem gemeinsamen Fahrwerk abgestützt sind. Zur Realisierung der notwendigen Bewegungsfreiheit der Wagenkästen gegeneinander sind aufwendige Gelenkanordnungen zusätzlich zum horizontal angeordneten Drehkranz erforderlich. Für Fahrzeuge mit niedrigem Bodenbereich (Niederflurfahrzeuge) ist die Gelenkverbindung wegen der großen erforderlichen Bauhöhe nicht geeignet.

Aus der DE 39 02 924 ist eine Gelenkverbindung bekannt, bei der ein Stützlager eines ersten Fahrzeugteils von unten in den freien Raum eines geschlossenen Rollkranzes greift und am Innenring des Rollkranzes festgelegt ist. Der Außenring des Rollkranzes ist in zwei gegenüberliegend angeordneten Lagern, die am Ende zweier Verbindungsarme angeordnet sind und den Rollkranz gabelartig einfassen, um die Fahrzeugquerachse schwenkbar gelagert. Durch diese Integration des Stützträgers in den freien Raum des Rollkranzes sind niedrige Fußbödenhöhen des Fahrzeuges erreichbar, wobei auch ein ausreichender Abstand zwischen der Unterseite des Dichtungsbalges und dem Schienenniveau verwirklicht werden kann.

Die vorstehend beschriebene Gelenkverbindung verwendet ein relativ großes Wälzlager als Rollkranz, wobei sowohl bei offenen als auch bei geschlossenen Bauarten aufgrund von nicht vermeidbaren Verformungen der Führungsbahnen ein erheblicher Verschleiß der Wälzkörper gegeben ist, insbesondere wenn größere Momente abgefangen werden müssen. Stöße und Körperschall können ungedämpft auf das Wälzlager übertragen werden.

Des weiteren ist der größt mögliche horizontale Knickwinkel zwischen den Fahrzeugteilen durch die breite Basis der die Fahrzeugteile überragenden Verbindungsarme stärker eingeschränkt als bei einer geringeren Basis.

Der Erfindung liegt die Aufgabe zugrunde, eine Gelenkverbindung der eingangs genannten Art so zu verbessern; daß das Wälzlager von verschleißfördernden Belastungen entlastet wird und größere horizontale Knickwinkel zwischen den verbundenen Fahrzeugteilen realisierbar sind.

Diese Aufgabe wird bei einer gattungsgemäßen Gelenkverbindung durch die im kennzeichnenden Teil des Anspruchs 1 genannter Merkmale gelöst.

Zweckmäßige Ausgestaltungen und Weiterbildungen der Erfindung sind in den Unteransprüchen angegeben.

Die Erfindung wird nachstehend mit Bezug auf die Zeichnung an einem Ausführungsbeispiel näher erläutert. Es zeigen
- Fig. 1: den Gelenkbereich eines Schienenfahrzeuges mit einer erfindungsgemäßen Gelenkverbindung, in Draufsicht;
- Fig. 2: den Schnitt nach der Linie II - II in Fig. 1.

Die erfindungsgemäße Gelenkverbindung ist zwischen zwei Fahrzeugteilen 1 und 2 angeordnet und weist ein Wälzlager 3, das an einem über das Ende eines ersten Fahrzeugteiles 1 hinausragenden Stützträger 1a gehalten ist und das mit einem über das Ende eines zweiten Fahrzeugteiles 2 hinausragenden Stützträger 2a gelenkig zusammenwirkt und horizontale und vertikale Auslenkbewegungen der Fahrzeugteile 1 und 2 zueinander zuläßt.

Dabei ist der Stützträger 2a des zweiten Fahrzeugteiles 2 über ein Elastomergelenk 4 am Innenring 3a des Wälzlagers 3 festgelegt. Das Elastomergelenk 4 ist in dem vom Innenring 3a umschlossenen Raum in vertikaler Streckung mindestens im wesentlichen in der Höhenebene bzw. in der vertikalen Erstreckung des Wälzlagers 3 angeordnet.

Das Elastomergelenk 4 weist einen starren Innenkörper 4a ausreichender Festigkeit mit einer vertikalen Zentrierbohrung 4d und mit einer Zentrierfläche 4e für einen am Stützträger 2a befestigten Zentrierbolzen 7 auf. Weiter weist das Elastomergelenk 4 einen starren Außenkörper 4b mit einer Auflagefläche 4f für den Innenring 3a des Wälzlagers 3 und eine zwischen dem Innen- und Außenkörper 4a und 4b angeordnete Elastomerschicht 4c auf.

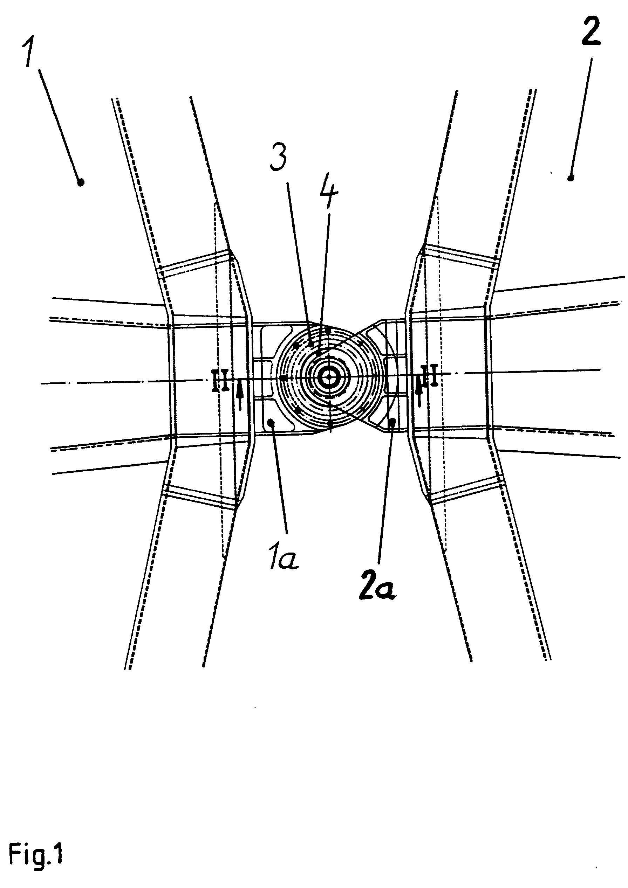

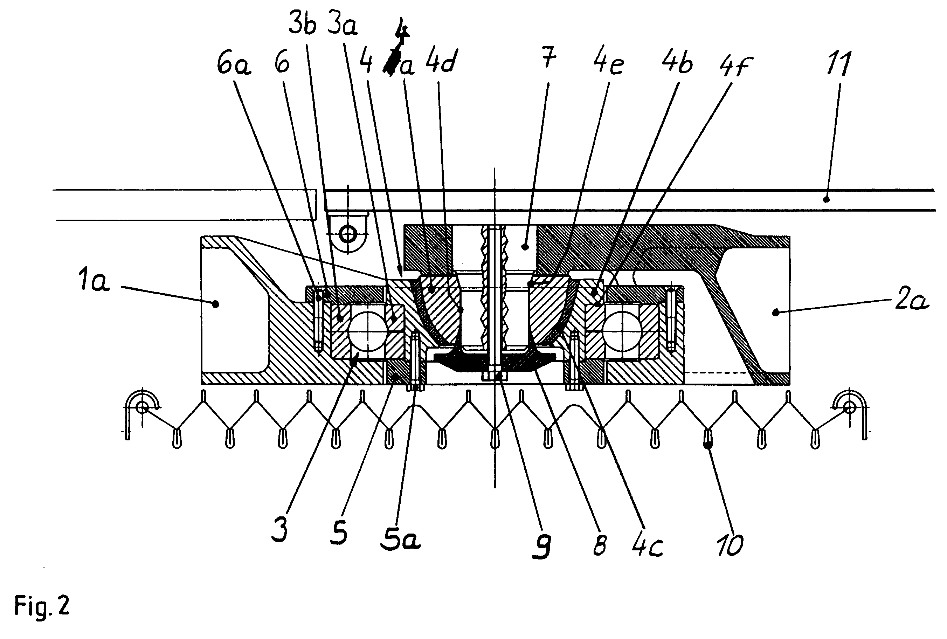

Der Außenradius des Innenkörpers 4a ist in Höhenerstreckung des Innenkörpers 4a nach einer vorgegebenen mathematischen Funktion zu- bzw. abnehmend ausgebildet und der Innenradius des Außenkörpers 4b ist in gleichem Verhältnis in Höhenerstreckung des Außenkörpers 4b ab- bzw. zunehmend ausgebildet. In dem in den Figuren 1 und 2 dargestellten Ausführungsbeispiel ist das Elastomergelenk darart angeordnet, daß der Außenradius des Innenkörpers 4a nach einer bestimmten mathematischen Funktion abnimmt und der Innenradius des Außenkörpers 4b in gleichem Maße abnimmt. Prinzipiell läßt sich das Elastomergelenk 4 auch um 180 ° gedreht anordnen.

Derartig ausgebildete Elastomerlager 4 werden für bestimmte Mantelformen, die mindestens annähernd der Oberfläche einer Halbkugel entsprechen, als hemisphärische Lager bezeichnet. Ein solches Lager ist in Fig. 2 dargestellt.

Die Federsteifigkeit des Elastomergelenkes 4 ist mindestens für kleine Auslenkungen des Innen- und Außenkörpers 4a und 4b gegeneinander aus der Vertikalen in Längs- und Querrichtung annähernd konstant ausgebildet. Die betriebsbedingt aufzunehmenden Auslenkungen aus der Vertikalen betragen etwa 2 ° -4 °.

Das Wälzlager 3 ist als handelsübliches Vierpunktlager mit geteiltem Innenring 3a und mit im Vergleich zu handelsüblichen Rollkränzen geringem Durchmesser ausgebildet. Die in Gelenkverbindungen verwendeten Rollkranze weisen Außendurchmesser von ca. 0,5 m und größer auf. Das benötigte Wälzlager 3 kann erheblich kleiner ausfallen (Außendurchmesser etwa 0,3 m). Der Innenring 3a des Wälzlagers 3 ist mittels eines Spannrings 5 und Spannschrauben 5a an der Auflagefläche 4f des Außenkörpers 4b des Elastomergelenks 4 festgelegt. Der Außenring 3b des Wälzlagers 3 ist mittels eines zweiten Spannrings 6 und Spannschrauben 6a am Stützträger 1a des Fahrzeugteiles 1 festgelegt. Damit ist das Wälzlager radial und axial verspannt und weist mindestens im Einbauzustand weder radiales noch axiales Spiel auf.

Am Stützträger 2a ist ein Zentrierbolzen 7 befestigt, der von einer Seite, hier von oben, in die Zentrierbohrung 4d eingreift und der auf der gegenüberliegenden Seite mittels eines Zentrierrings 8 und einem lösbaren Befestigungsmittel (Dehnschraube 9) am Innenkörper 4a des Elastomergelenks 4 festgelegt ist.

Der Stützträger 2a des Fahrzeugteiles 2 greift mit dem zugeordneten Zentrierbolzen 7 von oben in die Zentrierbohrung 4d ein und ist somit auf dem Innenkörper 4a des Elastomergelenks 4 abgestützt. Besonders günstige Montage und Demontageabläufe sind gegeben, wenn der Fahrzeugteil 2 ein Endwagenteil ist, da dann ein einfaches Auflagern und Anheben gegeben ist. Der Gelenkbereich ist durch einen umlaufenden Gelenkfaltenbalg 10, der zwischen den Fahrzeugteilen 1 und 2 angeordnet ist, geschützt. Durch die flache Bauweise der Gelenkverbindung ist insbesondere auch eine niedrige Fußbodenhöhe (Fußboden 11) bei ausreichendem Abstand zwischen der Unterseite des Gelenkfaltenbalges 10 und dem Schienenniveau erzielbar.

## Patentansprüche

1. Gelenkverbindung zum gelenkigen Verbinden von Fahrzeugteilen (1 und 2) eines mehrgliedrigen Schienenfahrzeuges mit Hilfe eines Wälzlagers (3), das an einem über das Ende eines der Fahrzeugteile (2) hinausragenden Stützträgers (2a) gehalten ist und mit einem über das Ende eines anderen Fahrzeugteils (1) hinausragenden Stützträger (1a) gelenkig zusammenwirkt und horizontale und vertikale Auslenkbewegungen der Fahrzeugteile (1 und 2) zueinander zuläßt, wobei der Stützträger (2a) des zweiten Fahrzeugteils (2) über ein Elastomergelenk (4) am Innenring (3a) des Wälzlagers (3) festgelegt ist, **dadurch gekennzeichnet**, daß das Wälzlager (3) mindestens im Einbauzustand weder radiales noch axiales Spiel aufweist, daß das Elastomergelenk (4) in dem vom Innenring (3a) umschlossenen Raum so angeordnet ist, daß es in vertikaler Erstreckung mindestens im wesentlichen bis zur Höhenebene des Wälzlagers (3) reicht und daß das Elastomergelenk (4) einen starten Innenkörper (4a) mit Zentrierbohrung (4d) und mit einer Zentrierfläche (4e) für einen am Stützträger (2a) befestigten Zentrierbolzen (7) einen starten Außenkörper (4b) mit Auflagefläche (4f) für den Innenring (3a) des Wälzlagers (3) und eine zwischen dem Innen- und Außenkörper (4a und 4b) angeordnete Elastomerschicht (4c) aufweist.

2. Gelenkverbindung nach Anspruch 1, **dadurch gekennzeichne**t, daß der Außenradius des Innenkörpers (4a) in Höhenerstreckung des Innenkörpers (4a) nach einer vorgegebenen mathematischen Funkton zu- bzw. abnehmend ausgebildet ist und der Innenradius des Außenkörpers (4b) in gleichem Maße in Höhenerstreckung des Außenkörpers (4b) ab- bzw. zunehmend ausgebildet ist.

3. Gelenkverbindung nach Anspruch 1 oder 2, **dadurch gekennzeichnet**, daß die Federsteifigkeit des Elastomergelenks (4) mindestens bei kleinen Auslenkungen des Innen- und Außenkörpers (6a und 6b) gegeneinander aus der Vertikalen in Längs- und Querrichtung annähernd konstant ausgebildet ist.

4. Gelenkverbindung nach mindestens einem der vorhergehenden Ansprüche 1 bis 3, **dadurch gekennzeichnet**, daß das Wälzlager (3) als Vierpunktlager mit geteiltem Innenring (3a) ausgebildet ist.

5. Gelenkverbindung nach Anspruch 4, **dadurch gekennzeichnet**, daß der Innenring (3a) des Wälzlagers (3) mittels Spannring (5) und Spannschrauben (5a) an der Auflagefläche (4f) des Außenkörpers (4b) des Elastomergelenks (4) festgelegt ist und daß der Außenring (3b) des Wälzlagers (3) mittels eines zweiten Spannrings (6) und Spannschrauben (6a) am Stützträger (2a) des Fahrzeugteils (2) festgelegt ist.

6. Gelenkverbindung nach einem oder mehreren der vorhergehenden Ansprüche 1 bis 5, **dadurch gekennzeichnet**, daß am Stützträger (2a) ein Zentrierbolzen (7) befestigt ist, der von einer Seite in die Zentrierbohrung (4d) eingreift und der auf der gegenüberliegenden Seite mittels Zentrierring (8) und einem Lösbaren Befestigungsmittel (Dehnschraube 9) am Innenkörper (4a) des Elastomergelenks (4) festgelegt ist.

7. Gelenkverbindung nach einem oder mehreren der vorhergehenden Ansprüche 1 bis 6, **dadurch gekennzeichnet**, daß der Stützträger (2a) des Fahrzeugteils (2) mit dem zugeordneten Zentrierbolzen (7) von oben in die Zentrierbohrung (4d) eingreift und der Stützträger (2a) über den Zentrierbolzen (7) auf dem Innenkörper (4a) des Elastomergelenks (4) abgestützt ist.

8. Gelenkverbindung nach einem oder mehreren der vorhergehenden Ansprüche 1 bis 7, **dadurch gekennzeichnet**, daß der Fahrzeugteil (2) ein Endwagenteil ist.

## Claims

1. Articulated connection for articulated connection of vehicle parts (1 and 2) of a multi-element rail vehicle with the aid of a roller bearing (3) which is mounted on a supporting carrier (2a) projecting beyond the end of one of the vehicle parts (2) and cooperates in articulated fashion with a supporting carrier (1a) projecting beyond the end of another vehicle part (1) and allows horizontal and vertical deflecting movements of the vehicle parts (1 and 2) relative to one another, wherein the supporting carrier (2a) of the second vehicle part (2) is locked to the inner ring (3a) of the roller bearing (3) by means of an elastomer joint (4), characterised in that at least in the installed state the roller bearing (3) exhibits neither radial nor axial play, in that the elastomer joint (4) is disposed in the space surrounded by the inner ring (3a) so that in the vertical extension it extends at least essentially as far as the vertical plane of the roller bearing (3) and in that the elastomer joint (4) exhibits a rigid inner body (4a) with a centering bore (4d) and with a centering face (4e) for a centering pin (7) fixed on the supporting carrier (2a), a rigid outer body (4b) with a supporting face (4f) for the inner ring (3a) of the roller bearing (3), and an elastomer layer (4c) disposed between the inner and outer bodies (4a and 4b).

2. Articulated connection according to claim 1, characterised in that the outer radius of the inner body (4a) in the vertical extension of the inner body (4a) is such that it increases and decreases according to a predetermined mathematical function and the inner radius of the outer body (4b) is such that it decreases and increases in the same way in the vertical extension of the outer body (4b).

3. Articulated connection according to claim 1 or 2, characterised in that the spring stiffness of the elastomer joint (4) at least with small deflections of the inner and outer bodies (6a and 6b) relative to one another out of the vertical in the longitudinal and transverse directions is approximately constant.

4. Articulated connection according to at least one of the preceding claims 1 to 3, characterised in that the roller bearing (3) is a four-point bearing with a divided inner ring (3a).

5. Articulated connection according to claim 4, characterised in that the inner ring (3a) of the roller bearing (3) is locked to the supporting face (4f) of the outer body (4b) of the elastomer joint (4) by means of a clamping ring (5) and clamping screws (5a) and in that the outer ring (3b) of the roller bearing (3) is locked to the supporting carrier (2a) of the vehicle part (2) by means of a second clamping ring (6) and clamping screws (6a).

6. Articulated connection according to one or more of the preceding claims 1 to 5, characterised in that a centering pin (7) is fixed to the supporting carrier (2a), which pin engages in the centering bore (4d) from one side and on the opposite side is locked to the inner body (4a) of the elastomer joint (4) by means of a centering ring (8) and a detachable fixing means (necked-down screw 9).

7. Articulated connection according to one or more of the preceding claims 1 to 6, characterised in that the supporting carrier (2a) of the vehicle part (2) engages from above with the associated centering pin (7) in the centering bore (4d) and the supporting carrier (2a) is supported on the inner body (4a) of the elastomer joint (4) by means of the centering pin (7).

8. Articulated connection according to one or more of the preceding claims 1 to 7, characterised in that the vehicle part (2) is an end vehicle part.

## Revendications

1. Liaison articulée pour relier de manière articulée des éléments (1 et 2) d'un véhicule sur rails à éléments multiples à l'aide d'un palier à roulement (3) qui est fixé sur un support d'appui (2a) dépassant de l'extrémité d'un premier élément de véhicule (2), qui coopère de manière articulée avec un support d'appui (1a) dépassant de l'extrémité d'un second élément de véhicule (1), et qui autorise des mouvements de déviation horizontaux et verticaux des éléments de véhicule (1 et 2) l'un par rapport à l'autre, le support d'appui (2a) du second élément de véhicule (2) étant immobilisé contre la bague intérieure (3a) du palier à roulement (3) grâce à une articulation en élastomère (4), **caractérisée en ce que** le palier à roulement (3) ne présente ni un jeu radial, ni un jeu axial, au moins à l'état monté, en ce que l'articulation en élastomère (4) est disposée dans l'espace défini par la bague intérieure (3a) de manière à s'étendre à la verticale au moins approximativement jusqu'à la hauteur du palier à roulement (3), et en ce que l'articulation en élastomère (4) comprend un corps intérieur rigide (4a) pourvu d'un perçage de centrage (4d) et d'une surface de centrage (4e) pour un goujon de centrage (7) fixé au support d'appui (2a), un corps extérieur rigide (4b) pourvu d'une surface d'appui (4f) pour la bague intérieure (3a) du palier à roulement (3), et une couche en élastomère (4c) disposée entre les corps intérieur et extérieur (4a et 4b).

2. Liaison articulée selon la revendication 1, **caractérisée** en ce que le rayon extérieur du corps intérieur (4a), est étudié pour augmenter ou diminuer suivant une fonction mathématique prédéfinie, sur la hauteur du corps intérieur (4a), tandis que le rayon intérieur du corps extérieur (4b) est étudié pour diminuer ou augmenter dans la même proportion sur la hauteur du corps extérieur (4b).

3. Liaison articulée selon la revendication 1 ou 2, **caractérisée** en ce que la rigidité de ressort de l'articulation élastomère (4) est étudiée pour être approximativement constante au moins dans le cas de faibles déviations des corps intérieur et extérieur (4a et 4b) l'un par rapport à l'autre hors de la verticale, dans les sens longitudinal et transversal.

4. Liaison articulée selon l'une au moins des revendications 1 à 3 précédentes, **caractérisée** en ce que le palier à roulement (3) est conçu comme un palier à quatre points avec une bague intérieure en deux pièces (3a).

5. Liaison articulée selon la revendication 4, **caractérisée** en ce que la bague intérieure (3a) du palier à roulement (3) est immobilisée contre la surface d'appui (4f) du corps extérieur (4b) de l'articulation en élastomère (4) à l'aide d'une bague de serrage (5) et de vis de serrage (5a), et en ce que la bague extérieure (3b) du palier à roulement (3) est immobilisée contre le support d'appui (2a) de l'élément de véhicule (2) à l'aide d'une seconde bague de serrage (6) et de vis de serrage (6a).

6. Liaison articulée selon l'une au moins des revendications 1 à 5 précédentes, **caractérisée** en ce qu'il est prévu, fixé au support d'appui (2a), un goujon de centrage (7) qui pénètre, d'un côté, dans le perçage de centrage (4d), et qui est immobilisé, sur le côté opposé, contre le corps intérieur (4a) de l'articulation en élastomère (4) à l'aide d'une bague de centrage (8) et d'un moyen de fixation amovible (vis expansible 9).

7. Liaison articulée selon l'une au moins des revendications 1 à 6 précédentes, **caractérisée** en ce que le support d'appui (2a) de l'élément de véhicule (2) pénètre par le haut, avec le goujon de centrage associé (7), dans le perçage de centrage (4d), et le support d'appui (2a) est en appui sur le corps intérieur (4a) de l'articulation en élastomère (4) par l'intermédiaire du goujon de centrage (7).

8. Liaison articulée selon l'une au moins des revendications 1 à 7 précédentes, **caractérisée** en ce que l'élément de véhicule (2) est un élément de véhicule d'extrémité.
